# EUROPEAN PATENT APPLICATION

(11) **EP 1 717 916 A2**
(43) Date of publication of application: **02.11.2006**
(21) Application number: 06251631.5
(22) Date of filing: 27.03.2006
(51) Int. Cl.: H01S 3/109

(54) **Laser oscillation device**

(30) Priority: 31.03.2005 JP 2005101776; 17.11.2005 JP 2005332344
(71) Applicant: Kabushiki Kaisha TOPCON, Tokyo-to (JP)
(72) Inventor: Eno, Taizo, Kabushiki Kaisha Topcon, Itabashi-ku Tokyo-to (JP); Goto, Yoshiaki, Kabushiki Kaisha Topcon, Itabashi-ku Tokyo-to (JP); Momiuchi, Masayuki, Kabushiki Kaisha Topcon, Itabashi-ku Tokyo-to (JP)
(74) Representative: Neobard, William John

(57) **Abstract**

A laser oscillation device, comprising a laser crystal which is an optical crystal for oscillating an incident excitation light to a fundamental wave, a wavelength conversion crystal for second harmonic wave which is an optical crystal for converting the fundamental wave to a second harmonic wave, and a reflection film formed on an exit end surface of the laser crystal or on an incident end surface of the wavelength conversion crystal for second harmonic wave, wherein the reflection film reflects the second harmonic wave, and the second harmonic wave does not pass through the laser crystal.

## Description

### BACKGROUND OF THE INVENTION

The present invention relates to a laser oscillation device using a semiconductor laser as a source of excitation.

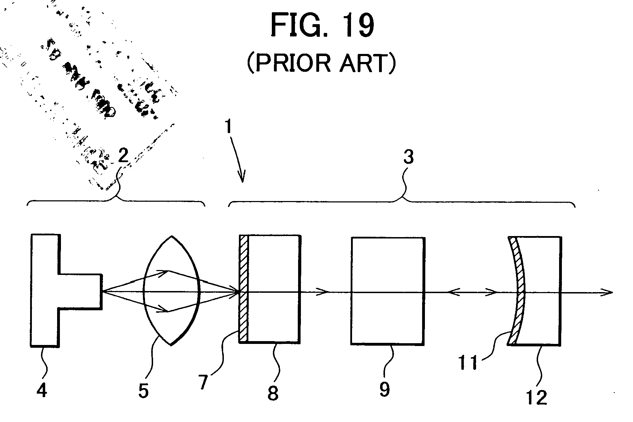

Fig. 19 shows an LD-pumped solid-state laser of one wavelength oscillation, which is an example of a laser oscillation device 1.

In Fig. 19, reference numeral 2 denotes a light emitting unit, and reference numeral 3 denotes an optical resonator. The light emitting unit 2 comprises an LD light emitter 4 and a condenser lens 5. Further, the optical resonator 3 comprises a first optical crystal (laser crystal 8) with a first dielectric reflection film 7 formed on the first optical crystal, a second optical crystal (nonlinear optical crystal (NLO) (wavelength conversion crystal 9 for second harmonic wave)), and a concave mirror 12 with a second dielectric reflection film 11 formed on the concave mirror 12. A laser beam is pumped at the optical resonator 3, and the laser beam is resonated, amplified, and outputted. As the laser crystal 8, Nd:YVO₄, etc. is used. As the wavelength conversion crystal 9 for second harmonic wave, KTP (KTiOPO₄; potassium titanyl phosphate),etc. is used.

The laser oscillation device 1 is used to project a laser beam with a wavelength of 809 nm, for instance, and the LD light emitter 4, which is a semiconductor laser, is used. The LD light emitter 4 fulfills the function as a pumping light generator to generate an excitation light. In the laser oscillation device 1, any type of light source means, which is not limited to a semiconductor laser, may be adopted so far as the light source means can generate a laser beam.

The laser crystal 8 is used to amplify the light. As the laser crystal 8, Nd:YVO₄ with an oscillation line of 1064 nm is used. In addition, YAG (yttrium aluminum garnet) doped with Nd³⁺ ion is adopted. YAG has oscillation lines of 946 nm, 1064 nm, 1319 nm, etc. Also, Ti (sapphire), etc. with an oscillation line of 700 - 900 nm may be used.

On a side of the laser crystal 8 closer to the LD light emitter 4, the first dielectric reflection film 7 is formed. The first dielectric reflection film 7 is highly transmissive to a laser beam from the LD light emitter 4 and is highly reflective to a light with an oscillation wavelength of the laser crystal 8. Also, the first dielectric reflection film 7 is highly reflective to second harmonic generation (SHG).

The concave mirror 12 is positioned so as to oppose to the laser crystal 8. A side of the concave mirror 12 closer to the laser crystal 8 is designed in shape of a concave spherical mirror having an adequate radius, and the second dielectric reflection film 11 is formed on the concave mirror 12. The second dielectric reflection film 11 is highly reflective to a light with an oscillation wavelength of the laser crystal 8, and the second dielectric film 11 is highly transmissive to the second harmonic wave.

As described above, when the first dielectric reflection film 7 of the laser crystal 8 is combined with the second dielectric reflection film 11 of the concave mirror 12, and when a laser beam from the LD light emitter 4 is pumped to the laser crystal 8 via the condenser lens 5, the light is reciprocally projected between the dielectric reflection film 7 of the laser crystal 8 and the second dielectric reflection film 11, and the light can be confined for long time. Thus, it is possible to resonate and amplify the light.

Within the optical resonator 3, which comprises the first dielectric film 7 of the laser crystal 8 and the second dielectric reflection film 11 of the concave mirror 12, the wavelength conversion crystal 9 for the second harmonic wave is placed. When a strong coherent light such as a laser beam enters the wavelength conversion crystal 9 for second harmonic wave, a second harmonic wave to double a light frequency is generated. The generation of the second harmonic wave is called "second harmonic generation". Therefore, a laser beam with a wavelength of 532 nm (i.e. a green laser beam) is projected from the laser oscillation device 1.

As a solid-state laser device to generate the second harmonic wave, a laser device disclosed in JP-A-5-145160 is known.

In the laser oscillation device 1 as described above and in the patent publication of JP-A-5-145160, the laser crystal 8 (NO:YVO₄) is mono-axial and has a property of a wave plate. When the second harmonic wave passes through the laser crystal 8, phase difference occurs and characteristics of polarization is changed. As a result, an elliptically polarized laser beam is projected from the conventional type laser oscillation device.

In some of laser devices, a linearly polarized laser beam is required. For instance, in a light wave (electro-optical) distance measuring system, a distance is determined based on phase difference between a reference light and a reflection light. Thus, accurate distance measurement cannot be performed when there is phase difference in the projected laser beam itself.

### SUMMARY OF THE INVENTION

It is an object of the present invention to provide a laser oscillation device, in which polarization characteristics are not changed inside the device.

To attain the above object, the present invention provides a laser oscillation device, comprising a laser crystal which is an optical crystal for oscillating an incident excitation light to a fundamental wave, a wavelength conversion crystal for second harmonic wave which is an optical crystal for converting the fundamental wave to a second harmonic wave, and a reflection film formed on an exit end surface of the laser crystal or on an incident end surface of said wavelength conversion crystal for second harmonic wave, wherein the reflection film reflects the second harmonic wave, and the second harmonic wave does not pass through said laser crystal. Also, the present invention provides the laser oscillation device, wherein there is provided a reflection film for reflecting the second harmonic wave on the exit end surface of said laser crystal or on the incident end surface of said wavelength conversion crystal for second harmonic wave, and polarization light of said second harmonic wave is maintained and the second harmonic wave is projected. Further, the present invention provides the laser oscillation device as described above, wherein a wavelength conversion crystal for third harmonic wave is provided on the wavelength conversion crystal for second harmonic wave so that the second harmonic wave is converted to a third harmonic wave by the wavelength conversion crystal for third harmonic wave, and a reflection film for reflecting the third harmonic wave is formed on an exit end surface of the wavelength conversion crystal for second harmonic wave or on an incident end surface of the wavelength conversion crystal for third harmonic wave. Also, the present invention provides the laser oscillation device as described above, wherein there is provided an optical member with optical effects is provided between the crystals as required. Further, the present invention provides the laser oscillation device as described above, wherein the optical crystals are joined together and are integrated with each other. Also, the present invention provides the laser oscillation device as described above, wherein the optical crystals adjacent to each other are jointed together by using an adhesive agent, the optical crystal positioned on an exit side is an optical crystal for converting an incident light to a harmonic wave of higher order, and a reflection film for reflecting the harmonic wave of higher order is formed on an incident end surface of the optical crystal positioned on the exit side. Further, the present invention provides the laser oscillation device as described above, wherein a reflection film for reflecting the harmonic wave of higher order is formed on the incident end surface of the optical crystal positioned on the exit side, and a polarization of the harmonic wave of higher order is maintained and the harmonic wave of higher order is projected.

According to the present invention, a laser oscillation device comprises a laser crystal which is an optical crystal for oscillating an incident excitation light to a fundamental wave, a wavelength conversion crystal for second harmonic wave which is an optical crystal for converting the fundamental wave to a second harmonic wave, and a reflection film formed on an exit end surface of said laser crystal or on an incident end surface of said wavelength conversion crystal for second harmonic wave, wherein said reflection film reflects the second harmonic wave, and the second harmonic wave does not pass through said laser crystal. Thus, the light is excited within the optical resonator, and the polarization condition of the converted laser beam are not changed.

Also, according to the present invention, in the laser oscillation device, a wavelength conversion crystal for third harmonic wave is provided on the wavelength conversion crystal for second harmonic wave so that the second harmonic wave is converted to a third harmonic wave by the wavelength conversion crystal for third harmonic wave, and a reflection film for reflecting the third harmonic wave is formed on an exit end surface of the wavelength conversion crystal for second harmonic wave or on an incident end surface of the wavelength conversion crystal for third harmonic wave. As a result, a third harmonic wave can be obtained in simple arrangement, and the polarization condition in the projected laser beam are not changed.

According to the present invention, optical crystals adjacent to each other are jointed together by using adhesive agents, an optical crystal positioned on an exit side is an optical crystal for converting an incident light to a harmonic wave of higher order, and a reflection film for reflecting harmonic wave of higher order is formed on an incident end surface of the optical crystal positioned on the exit side. Harmonic wave of higher order with high energy as converted does not pass through the parts of the adhesive agents. Thus, deterioration and damage of the adhesive agents can be avoided.

### BRIEF DESCRIPTION OF THE DRAWINGS

Fig. 1 is a drawing of a basic arrangement of the present invention;
Fig. 2 is a schematical drawing to show an arrangement of a first embodiment of the present invention;
Fig. 3 is a drawing to explain an example of integration in the first embodiment of the invention;
Fig. 4 is a drawing to explain another example of integration in the first embodiment of the invention;
Fig. 5 is a table to show specifications of films formed on optical crystals in the first embodiment;
Fig. 6 is a schematical drawing to show an arrangement of a second embodiment of the present invention;
Fig. 7 is a drawing to show an example of integration in the second embodiment;
Fig. 8 is a table to show specifications of films formed on optical crystals in the second embodiment;
Fig. 9 is a schematical drawing to show an arrangement of a third embodiment of the present invention;
Fig. 10 is a schematical drawing to show an arrangement of a fourth embodiment of the present invention;
Fig. 11 is a drawing to explain an example of integration in an arrangement of a fifth embodiment of the present invention;
Fig. 12 is a table to show specifications of films formed on optical crystals in the fifth embodiment;
Fig. 13 is a drawing to explain an example of integration in an arrangement of a sixth embodiment of the present invention;
Fig. 14 is a table to show specifications of films formed on optical crystals in the sixth embodiment;
Fig. 15 is a drawing to explain an example of integration in case films equivalent to the films of the first embodiment are formed;
Fig. 16 is a drawing to explain an example of integration in case films equivalent to the films of the second embodiment are formed;
Fig. 17 is a drawing to explain an example of integration in case films equivalent to the films of the fifth embodiment are formed;
Fig. 18 is a drawing to explain an example of integration in case films equivalent to the films of the sixth embodiment are formed; and
Fig. 19 is a schematical drawing to show an arrangement of a conventional type laser oscillation device.

### DETAILED DESCRIPTION OF THE PREFERRED EMBODIMENTS

Description will be given below on the best mode of the invention for carrying out the present invention referring to the drawings.

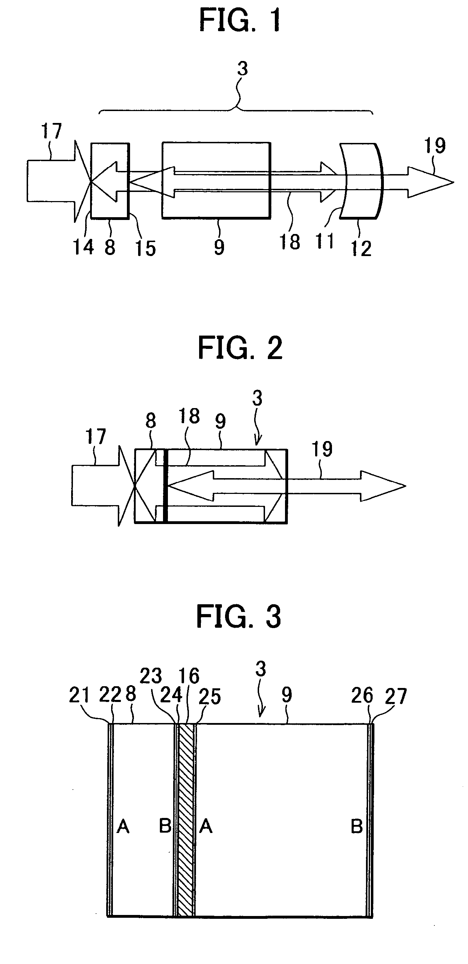

First, referring to Fig. 1, general features of the present invention will be described. In Fig. 1, the equivalent component as shown in Fig. 19 is referred by the same symbol. Also, in Fig. 1, a light emitting unit 2 is not shown.

An optical resonator 3 comprises a laser crystal 8, a wavelength conversion crystal 9 for second harmonic wave, and a concave mirror 12.

On an incident surface of the laser crystal 8, a first dielectric reflection film 14 is formed. On an exit surface of the laser crystal 8, a third dielectric reflection film 15 is formed. On the concave mirror 12, a second dielectric reflection film 11 is formed.

The first dielectric reflection film 14 is highly transmissive to an excitation light 17 (a laser beam from a light emitting unit 2 (See Fig. 19)), and the first dielectric reflection film 14 is highly reflective to an oscillation wavelength of the laser crystal 8 (fundamental wave 18). The third dielectric reflection film 15 is highly transmissive to the fundamental wave 18, and the third dielectric reflection film 15 is highly reflective to a second harmonic wave 19. The second dielectric reflection film 11 is highly reflective to the fundamental wave 18, and the second dielectric reflection film 11 is highly transmissive to the second harmonic wave 19. As dielectric materials, TiO₂ (n = 2.3 to 2.55), etc. is used as a high refractive material, and MgF₂ (n = 1.32 to 1.39), etc. is used as a low refractive material, which form an alternately stacked multilayer film.

The excitation light 17 of linearly polarized light is emitted from the light emitting unit 2. When the excitation light 17 passes through the fist dielectric reflection film 14 and enters the laser crystal 8, the fundamental wave 18 is oscillated. The fundamental wave 18 is pumped between the first dielectric reflection film 14 and the second dielectric reflection film 11. Further, when the fundamental wave 18 enters the wavelength conversion crystal 9 for second harmonic wave, the second harmonic wave 19 is generated.

The second harmonic wave 19 passes through the second dielectric reflection film 11 and is projected. Also, the second harmonic wave 19 is reflected by the third dielectric reflection film 15, and the second harmonic wave 19 passes through the second dielectric reflection film 11 and is projected. The second harmonic wave 19, which is reflected by the third dielectric reflection film 15, does not pass through the laser crystal 8, and the polarization is maintained. Then, a linearly polarized second harmonic wave (a laser beam) is projected from the optical resonator 3.

Fig. 2 to Fig. 5 schematically show a first embodiment of the present invention. Detailed description will be given below.

In the first embodiment, a laser oscillation device for projecting second harmonic wave is shown, in which the laser crystal 8 and the wavelength conversion crystal 9 for second harmonic wave are integrated with each other.

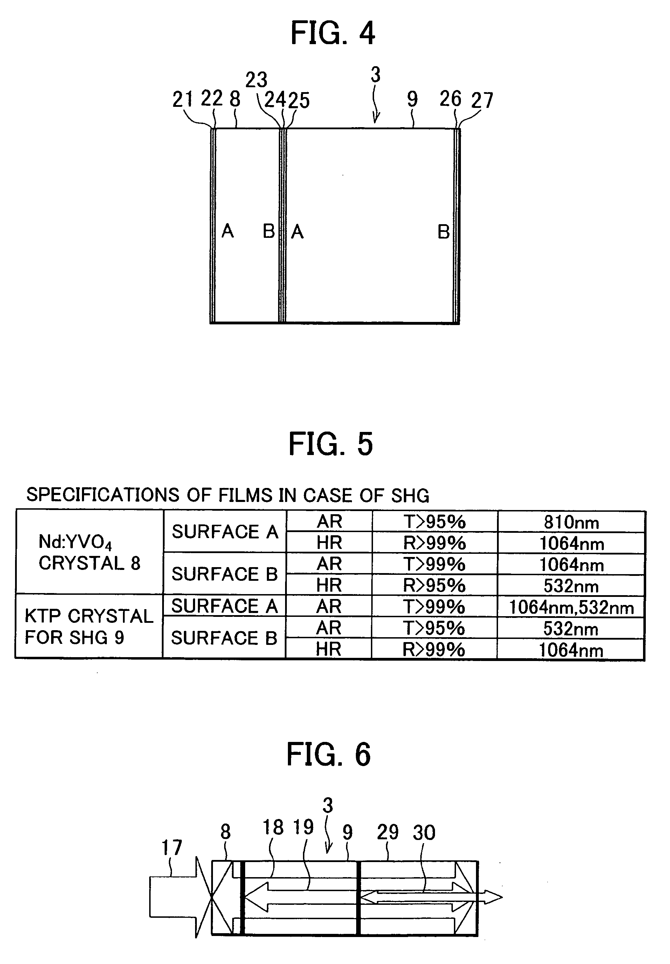

As cases where integration is carried out, there are the following cases; a case where integration is carried out by using an adhesive 16 shown in Fig. 3, e.g. by using an ultraviolet cure resin which has about the same value of refractive index as a refractive index of a crystal (Nd:YVO₄ (n = 1.97), or KTP (n = 1.76)), for instance, and a case where integration is carried out by optical contact as shown in Fig. 4. In each of these cases, a dielectric film having the characteristics as shown in Fig. 5 is formed on end surfaces of the laser crystal 8 and on end surfaces of the wavelength conversion crystal 9 for second harmonic wave respectively. As shown in Fig. 3 and Fig. 4, it is supposed that the end surfaces on the incident side of the laser crystal 8 and the wavelength conversion crystal 9 for second harmonic wave (end surfaces on the left side in the figure) are surfaces A, and that the end surfaces on the exit side (end surfaces on the right side in the figure) are surfaces B.

In Fig. 2, reference numeral 17 denotes an excitation light entering from the light emitting unit 2 (See Fig. 19) (e.g. a light with a wavelength of 810 nm). Reference numeral 18 denotes a fundamental wave oscillated by the laser crystal 8 when the excitation light 17 enters the laser crystal 8 (e.g. a light with a wavelength of 1064 nm). Reference numeral 19 denotes a second harmonic wave oscillated when the fundamental wave 18 enters the wavelength conversion crystal 9 for second harmonic wave (e.g. a light with a wavelength of 532 nm).

On the surface A of the laser crystal 8, an AR film 21 (anti-reflection film) for the excitation light 17 and an HR film 22 (highly reflective film) for the fundamental wave 18 are formed from the incident side. On the surface B of the laser crystal 8, an AR film 23 for the fundamental wave 18 and an HR film 24 which is highly reflective to the second harmonic wave 19 and highly transmissive to the fundamental wave 18 are formed from the incident side. On the surface A of the wavelength conversion crystal 9 for second harmonic wave, an AR film 25 for the fundamental wave 18 and the second harmonic wave 19 is formed. On the surface B of the wavelength conversion crystal 9 for second harmonic wave, an AR film 26 for the second harmonic wave 19, and an HR film 27 which is highly reflective to the fundamental wave 18 and highly transmissive to the second harmonic wave 19 are formed from the incident side. Examples of transmittance of each of the AR films and reflectivity of the HR films are shown in the table of Fig. 5. The AR film 25 on the surface A of the wavelength conversion crystal 9 for second harmonic wave may not be used in practical application.

In Fig. 2, when the excitation light 17 enters the laser crystal 8, the fundamental wave 18 is oscillated by the laser crystal 8. Because the HR film 24 is highly transmissive to the fundamental wave 18, the fundamental wave 18 is amplified between the HR film 22 on the incident surface of the laser crystal 8 and the HR film 27 on the exit surface of the wavelength conversion crystal 9 for second harmonic wave. When the fundamental wave 18 passes through the wavelength conversion crystal 9 for second harmonic wave, the second harmonic wave 19 is oscillated. Because the HR film 24 is highly reflective to the second harmonic wave 19, the second harmonic wave 19 does not pass through the laser crystal 8. The second harmonic wave 19 passes through the HR film 27 and is projected. Because the second harmonic wave 19 does not pass through the laser crystal 8, the polarization characteristics is not changed. When the excitation light 17 enters as a linearly polarized light, a linearly polarized second harmonic wave 19 is projected.

Fig. 6 to Fig. 8 schematically show a second embodiment of the present invention. Detailed description will be given below.

In the second embodiment, the laser crystal 8, the wavelength conversion crystal 9 for second harmonic wave, and a wavelength conversion crystal 29 for third harmonic wave are integrated using adhesives 16 and 28 so that a third harmonic wave is projected.

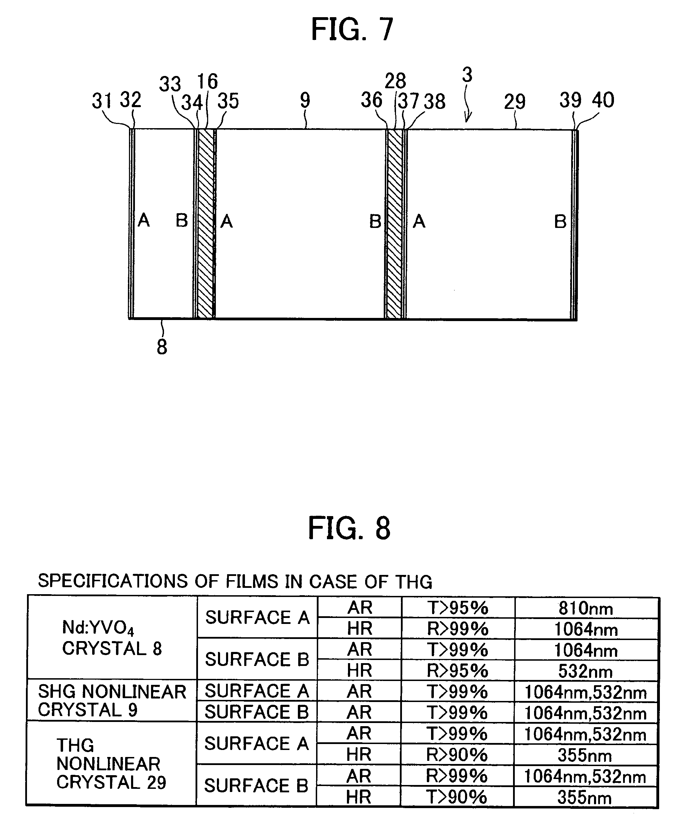

On surfaces A and B of each of the laser crystal 8, the wavelength conversion crystal 9 for second harmonic wave, and the wavelength conversion crystal 29 for third harmonic wave, films with the characteristics as shown in Fig. 8 are formed respectively.

On the end surface on the incident side (surface A) of the laser crystal 8, an AR film 31 for the excitation light 17 and an HR film 32 for the fundamental wave 18 are formed from the incident side. On the end surface on the exit side (surface B) of the laser crystal 8, an AR film 33 for the fundamental wave 18 and an HR film 34 which is highly reflective to the second harmonic wave 19 and highly transmissive to the fundamental wave 18 are formed from the incident side. On the surface A of the wavelength conversion crystal 9 for second harmonic wave, an AR film 35 for the fundamental wave 18 and the second harmonic wave 19 is formed. On the surface B of the wavelength conversion crystal 9 for second harmonic wave, an AR film 36 for the fundamental wave 18 and the second harmonic wave 19 is formed. On the surface A of the wavelength conversion crystal 29 for third harmonic wave, an AR film 37 for the fundamental wave 18 and the second harmonic wave 19 and an HR film 38 which is highly reflective to a third harmonic wave 30 and highly transmissive to the fundamental wave 18 and the second harmonic wave 19 are formed respectively from the incident side. On the surface B of the wavelength conversion crystal 29 for third harmonic wave, an AR film 39 for the fundamental wave 18 and the second harmonic wave 19 and an HR film 40 which is highly reflective to the fundamental wave 18 and the second harmonic wave 19 and highly transmissive to the third harmonic wave 30 are formed from the incident side respectively. The AR film 35 and the AR film 36 on the surfaces A and B of the wavelength conversion crystal 9 for second harmonic wave may not be used in practical application. Also, the HR film 38 may be formed on the surface B of the wavelength conversion crystal 9 for second harmonic wave.

Examples of anti-reflection ratio of each of the AR films and reflectivity of each of the HR films are shown in the table shown in Fig. 8.

In Fig. 6, when the excitation light 17 enters the laser crystal 8, the fundamental wave 18 is oscillated. The fundamental wave 18 is converted to the second harmonic wave 19 by the wavelength conversion crystal 9 for the second harmonic wave. Further, the second harmonic wave 19 is converted to the third harmonic wave 30 by the wavelength conversion crystal 29 for third harmonic wave. The third harmonic wave 30 is reflected by the HR film 38. The third harmonic wave 30 passes through the HR film 40 and is projected. In the second embodiment, the second harmonic wave 19 does not pass through the laser crystal 8 and the third harmonic wave 30 does not pass through the wavelength conversion crystal 9 for second harmonic wave and the laser crystal 8. Thus, the polarization condition is not changed. When the excitation light 17 enters as a linearly polarized light, the third harmonic wave 30 is projected as a linearly polarized light.

Although not specifically shown in the figure, when the wavelength conversion crystal for third harmonic wave is changed to a wavelength conversion crystal for fourth harmonic wave in the second embodiment, further, a fourth harmonic wave is oscillated. By forming predetermined AR films and HR films on the surfaces A and B of each of the optical crystals respectively, a fourth harmonic wave laser beam can be projected.

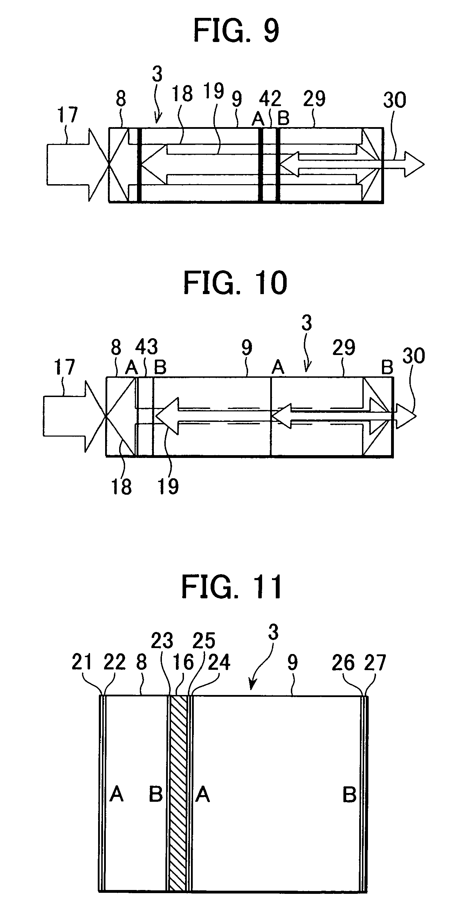

In Fig. 9, a third embodiment of the invention is briefly shown, in which the third harmonic wave is projected. In the third embodiment, an optical member, e.g. a wave plate, with optical effects is provided between the optical crystals as required.

For instance, when a polarizing plate 42 is placed as the wave plate between the wavelength conversion crystal 9 for second harmonic wave and the wavelength conversion crystal 29 for third harmonic wave, it is possible to project a laser beam as a linearly polarized laser beam, by designating a P-polarized light or an S-polarized light. It is further preferable that AR films for preventing reflection with respect to the fundamental wave 18 and the second harmonic wave 19 are formed respectively on both surfaces A and B of the polarizing plate 42.

Fig. 10 briefly shows a fourth embodiment of the invention. In this embodiment, an oversaturated absorptive material (e.g. Cr:YAG), i.e. a Q_{SW} 43, is placed as the optical member.

The Q_{SW} 43 is placed between the laser crystal 8 and the wavelength conversion crystal 9 for second harmonic wave. AR films are formed respectively on each of the surfaces A and B of the laser crystal 8, Q_{SW} 43, the wavelength conversion crystal 9 for second harmonic wave, and the wavelength conversion crystal 29 for third harmonic wave. The AR film on the surface A and the AR film on the surface B of the wavelength conversion crystal 29 for third harmonic wave may not be used in practical application.

On the surface A of the laser crystal 8, an HR film which is highly transmissive to the excitation light 17 and highly reflective to the fundamental wave 18 is formed. On the surface A of the wavelength conversion crystal 9 for second harmonic wave, an HR film which is highly transmissive to the fundamental wave 18 and highly reflective to the second harmonic wave 19 is formed. On the surface A of the wavelength conversion crystal 29 for third harmonic wave, an HR film which is highly transmissive to the fundamental wave 18 and to the second harmonic wave 19 and which is highly reflective to the third harmonic wave 30 is formed. It is further preferable that an HR film which is highly reflective to the fundamental wave 18 and to second harmonic wave 19 and which is highly transmissive to the third harmonic wave 30 is formed on the surface B of the wavelength conversion crystal 29 for third harmonic wave.

In the fourth embodiment as described above, when the excitation light 17 enters the laser crystal 8, the fundamental wave 18 is oscillated by the laser crystal 8. When the fundamental wave 18 passes through the Q_{SW} 43, the fundamental wave 18 is temporarily stored in the Q_{SW} 43. Further, when the fundamental wave 18 is released, the fundamental wave 18 is turned to the fundamental wave 18 of pulsed light.

The fundamental wave 18 of pulsed light is converted to the second harmonic wave 19 by the wavelength conversion crystal 9 for second harmonic wave. The second harmonic wave 19 is reflected by the HR film on the surface A of the wavelength conversion crystal 9 for second harmonic wave and by the HR film on the surface B of the wavelength conversion crystal 29 for third harmonic wave. Further, the pulsed fundamental wave 18 is converted to the third harmonic wave 30 by the wavelength conversion crystal 29 for third harmonic wave. The third harmonic wave 30 is reflected by the HR film on the surface A of the wavelength conversion crystal 29 for third harmonic wave. Then, the pulsed third harmonic wave 30 is projected from the surface B of the wavelength conversion crystal 29 for third harmonic wave.

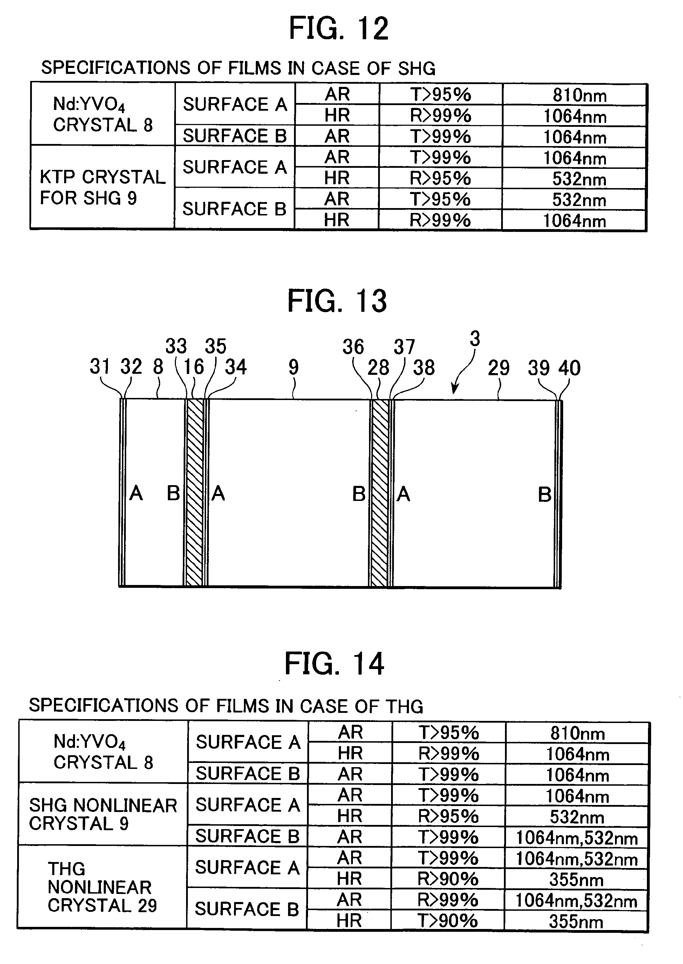

Fig. 11 and Fig. 12 each schematically shows a fifth embodiment. Detailed description will be given below.

In the fifth embodiment, a laser oscillation device for projecting a second harmonic wave is shown. The laser oscillation device has an arrangement similar to the laser oscillation device of the first embodiment as shown in Fig. 2. A laser crystal 8 and a wavelength conversion crystal 9 for second harmonic wave are integrated by using an adhesive agent 16.

Almost identically to the first embodiment, the adhesive agent 16 used here is an ultraviolet cure resin, which has about the same value of a refractive index as a refractive index of a crystal (Nd:YVO₄ (n = 1.97), or KTP (n = 1.76)), for instance. On an incident end surface (surface A) of the laser crystal 8, an AR film 21 and a HR film 22, which are dielectric films, are formed from the incident side. On an exit end surface (surface B) of the wavelength conversion crystal 9 for second harmonic wave, an AR film 26 and a HR film 27, which are dielectric films, are formed from the incident side. The characteristics of these dielectric films are shown in Fig. 12, and these characteristics are similar to characteristics of the first embodiment.

Next, an AR film 23 is formed on a surface B of the laser crystal 8. Dielectric films of AR film 25 and HR film 24 are formed from the incident side on a surface A of the wavelength conversion film 9 for second harmonic wave. The AR film 23 on the surface B of the laser crystal 8 may not be used in practical application.

On the surface A of the laser crystal 8, the AR film 21 is an anti-reflection film which is highly transmissive to the excitation light 17, and the HR film 22 is highly reflective film to the fundamental wave 18. On the surface B of the laser crystal 8, the AR film 23 is an anti-reflection film which is highly transmissive to the fundamental wave 18.

On the surface A of the wavelength conversion crystal 9 for second harmonic wave, the AR film 25 is highly transmissive to the fundamental wave 18. The HR film 24 is highly transmissive to the fundamental wave 18, and the HR film 24 is highly reflective to the second harmonic wave 19. The HR film 24 is highly reflective to the second harmonic wave 19, which is a wave converted to higher order from the fundamental wave 18.

Further, on the surface B of the wave length conversion crystal 9 for second harmonic wave, the AR film 26 is an anti-reflection film for the second harmonic wave 19. The HR film 27 is highly reflective to the fundamental wave 18, and the HR film 27 is highly transmissive to the second harmonic wave 19. For transmissivity of each of the AR films and reflectivity of each of the HR films, examples are shown in Fig. 12.

In Fig. 11, when the excitation light 17 enters the laser crystal 8, the fundamental wave 18 is oscillated by the laser crystal 8, and the fundamental wave 18 is reflected and amplified between the HR film 22 and the HR film 27. When the fundamental wave 18 passes through the wavelength conversion crystal 9 for second harmonic wave, the second harmonic wave 19 is oscillated. The second harmonic wave 19 is reflected by the HR film 24, and the second harmonic wave 19 passes through the HR film 27 and is projected (See Fig. 2).

The second harmonic wave 19 does not pass through the laser crystal 8. The second harmonic wave 19 does not pass through the adhesive agent 16, and the second harmonic wave 19 is projected from the HR film 27. Characteristics of polarization of the second harmonic wave 19 is not changed. When the excitation light 17 enters as a linearly polarized light, a linearly polarized second harmonic wave 19 is projected. Further, the second harmonic wave 19 with high energy does not pass through the adhesive agent 16, and deterioration and damage of the adhesive agent 16 can be prevented.

Fig. 13 and Fig. 14 each schematically shows a sixth embodiment, and detailed description will be given below.

In the sixth embodiment, a laser oscillation device for projecting a third harmonic wave is shown. The laser oscillation device comprises the laser crystal 8, the wavelength conversion crystal 9 for second harmonic wave, and the wavelength conversion crystal 29 for third harmonic wave integrated by using the adhesive agents 16 and 28. The laser oscillation device has similar arrangement as the arrangement of the second embodiment shown in Fig. 6 and Fig. 7. The adhesive agents 16 and 28 used here are the similar as the adhesive agents 16 and 28 of the second embodiment.

Now, description will be given on dielectric films formed on surfaces A and B of each of the laser crystal 8, the wavelength conversion crystal 9 for second harmonic wave, and the wavelength conversion crystal 29 for third harmonic wave. The characteristics of the dielectric films formed are shown in Fig. 14.

On an incident end surface (surface A) of the laser crystal 8, an AR film 31 which is highly transmissive to the excitation light 17 and an HR film 32 which is highly reflective to the fundamental wave 18 are formed from the incident side. On an exit end surface (surface B) of the laser crystal 8, an AR film 33 which is highly transmissive to the fundamental wave 18 is formed.

On a surface A of the wavelength conversion crystal 9 for second harmonic wave, an AR film 35 and an HR film 34 are formed in the order from the incident side. The AR film 35 is highly transmissive to the fundamental wave 18, and the HR film 34 is highly transmissive to the fundamental wave 18. The HR film 34 is highly reflective to the second harmonic wave 19. On a surface B of the wavelength conversion crystal 9 for second harmonic wave, an AR film 36 which is highly transmissive to the fundamental wave 18 and the second harmonic wave 19 is formed.

On a surface A of the wavelength conversion crystal 29 for third harmonic wave, an AR film 37 and an HR film 38 are formed in the order from the incident side. The AR film 37 is highly transmissive to the fundamental wave 18 and the second harmonic wave 19. The HR film 38 is highly transmissive to the fundamental wave 18 and the second harmonic wave 19, and the HR film 38 is highly reflective to the third harmonic wave 30. On a surface B of the wavelength conversion crystal 29 for third harmonic wave, an AR film 39 and an HR film 40 are formed in the order from the incident side. The AR film 39 is highly transmissive to the fundamental wave 18 and the second harmonic wave 19, and the HR film 40 is highly reflective to the fundamental wave 18 and the second harmonic wave 19, and the HR film 40 is highly transmissive to the third harmonic 30.

Description will be given below on operation referring to Fig. 6. When the excitation light 17 enters the laser crystal 8, the fundamental wave 18 is oscillated, and the fundamental wave 18 is converted to the second harmonic wave 19 by the wavelength conversion crystal 9 for second harmonic wave. The second harmonic wave 19 is reflected between the HR film 34 and the HR film 40. The second harmonic wave 19 passes through the wavelength conversion crystal 29 for third harmonic wave, and the second harmonic wave 19 is converted to the third harmonic wave 30. The third harmonic wave 30 is reflected by the HR film 38, and the third harmonic wave 30 passes through the HR film 40 and is projected.

In the sixth embodiment, the HR film 34 reflects the second harmonic wave 19, which has been converted to higher order with respect to the incident fundamental wave 18. The HR film 38 reflects the third harmonic wave 30, which has been converted to higher order with respect to the incident second harmonic wave 19. The second harmonic wave 19 does not pass through the laser crystal 8 and the adhesive agent 16.

The third harmonic wave 30 does not pass through the inside of the wavelength conversion crystal 9 for second harmonic wave, the inside of the laser crystal 8 and the adhesive agent 28. As a result, polarization condition is not changed. When the excitation light 17 enters as a linearly polarized light, the third harmonic wave 30 is projected as a linearly polarized light. The laser beam, which has been converted to a harmonic wave of higher order with high energy with respect to the incident wave, does not pass through the adhesive agents 16 and 28. Thus, deterioration and damage of the adhesive agents 16 and 28 can be prevented even in case of high-output laser.

The first embodiment to the sixth embodiment have been shown schematically, and the films formed on the surfaces A and B of each of the laser crystal 8, the wavelength conversion crystal 9 for second harmonic wave, and the wavelength conversion crystal 29 for third harmonic wave have been described as the films with different functions. However, when the films are formed in practical case, thin films are formed in multiple layers, and the films to fulfill functions as required and to have performance are formed. Normally, the films are regarded as a single film.

Specifically, on the surfaces A and B of each of the laser crystal 8, the wavelength conversion crystal 9 for second harmonic wave, and the wavelength conversion crystal 29 for third harmonic wave, films having the functions as required are respectively formed.

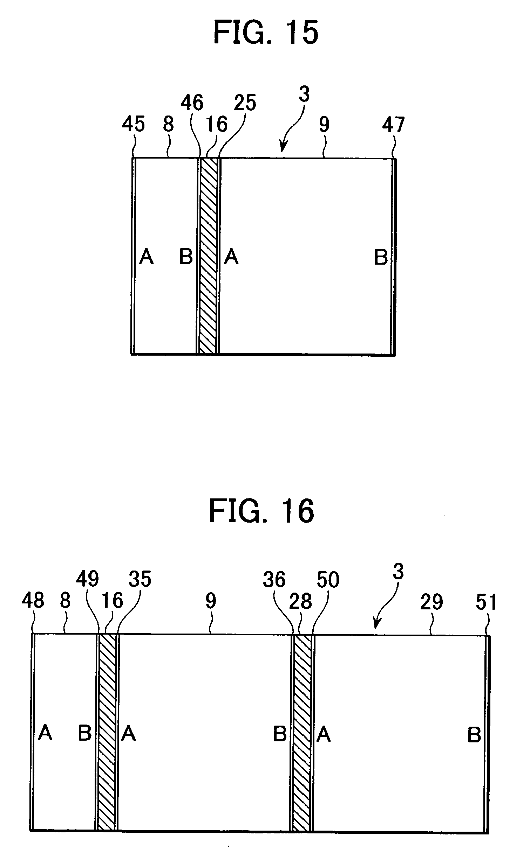

For example, when matching is made with the first embodiment (See Fig. 3), a dielectric film 45 having the functions of the AR film 21 and the HR film 22 is formed on the surface A of the laser crystal 8 as shown in Fig. 15. A dielectric film 46 having the functions of the AR film 23 and the HR film 24 is formed on the surface B of the laser crystal 8. On the surface A of the wavelength conversion crystal 9 for second harmonic wave, the AR film 25 is formed. On the surface B of the wavelength conversion crystal 9 for second harmonic wave, a dielectric film 47 having the functions of the AR film 26 and the HR film 27 is formed. The specifications of the films are similar to the specifications shown in Fig. 5.

When matching is made with the second embodiment (See Fig. 7), a dielectric film 48 having the functions of the AR film 31 and the HR film 32 is formed on the surface A of the laser crystal 8 as shown in Fig. 16. A dielectric film 49 having the functions of the AR film 33 and the HR film 34 is formed on the surface B of the laser crystal 8. The AR film 35 is formed on the surface A of the wavelength conversion crystal 9 for second harmonic wave, and the AR film 36 is formed on the surface B of the wavelength conversion crystal 9 for second harmonic wave.

A dielectric film 50 having the functions of an AR film 37 and an HR film 38 is formed on the surface A of the wavelength conversion crystal 29 for third harmonic wave. A dielectric film 51 having the functions of the AR film 39 and the HR film 40 is formed on the surface B of the wavelength conversion crystal 29 for third harmonic wave. The specifications of the dielectric films 48, 49, 50 and 51 are similar to the specifications shown in Fig. 8.

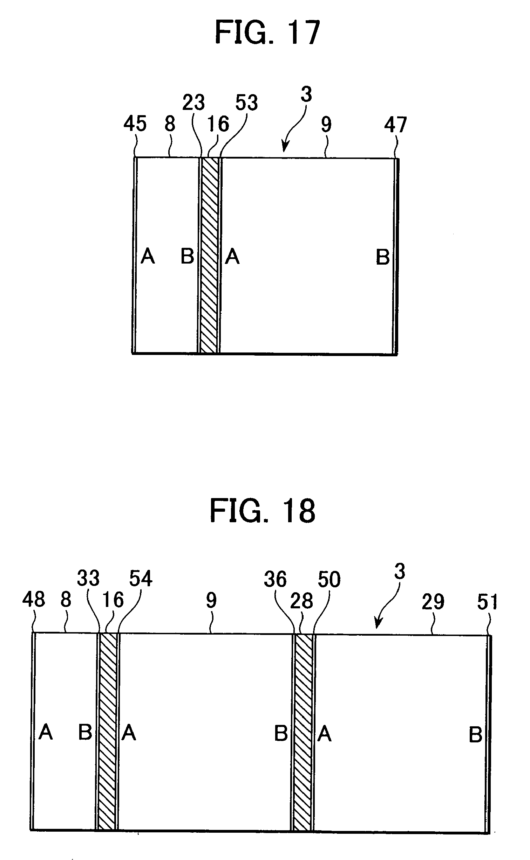

When matching is made with the fifth embodiment (See Fig. 11), a dielectric film 45 having the functions of the AR film 21 and the HR film 22 is formed on the surface A of the laser crystal 8 as shown in Fig. 17. The AR film 23 is formed on the surface B of the laser crystal 8. A dielectric film 53 having the functions of the AR film 25 and the HR film 24 is formed on the surface A of the wavelength conversion crystal 9 for second harmonic wave, and a dielectric film 47 having the functions of the AR film 26 and the HR film 27 is formed on the surface B of the wavelength conversion crystal 9 for second harmonic wave. The specifications of the dielectric films 45, 53 and 47 are similar to the specifications shown in Fig. 12.

Further, when matching is made with the sixth embodiment (See Fig. 13), a dielectric film 48 having the functions of the AR film 31 and the HR film 32 is formed on the surface A of the laser crystal 8 as shown in Fig. 18, and the AR film 33 is formed on the surface B of the laser crystal 8. A dielectric film 54 having the functions of the AR film 35 and the HR film 34 is formed on the surface A of the wavelength conversion crystal 9 for second harmonic wave, and the AR film 36 is formed on the surface B of the wave length conversion crystal 9 for second harmonic wave. A dielectric film 50 having the functions of the AR film 37 and the HR film 38 is formed on the surface A of the wavelength conversion crystal 29 for third harmonic wave, and a dielectric film 51 having the functions of the AR film 39 and the HR film 40 is formed on the surface B of the wavelength conversion crystal 29 for third harmonic wave.

The specifications of the films formed on the surfaces A and B of each of the laser crystal 8, the wavelength conversion crystal 9 for second harmonic wave, and the wavelength conversion crystal 29 for third harmonic wave are similar to the specifications shown in Fig. 14.

## Claims

1. A laser oscillation device, comprising a laser crystal which is an optical crystal arranged to receive incident excitation light and to produce a fundamental wave, a wavelength conversion crystal for second harmonic wave which is an optical crystal for converting the fundamental wave to a second harmonic wave, and a reflection film formed on an exit end surface of said laser crystal or on an incident end surface of said wavelength conversion crystal for second harmonic wave, wherein said reflection film reflects the second harmonic wave, and the second harmonic wave does not pass through said laser crystal.

2. A laser oscillation device according to claim 1, wherein there is provided a reflection film for reflecting the second harmonic wave on the exit end surface of said laser crystal or on the incident end surface of said wavelength conversion crystal for second harmonic wave, and polarization light of said second harmonic wave is maintained and the second harmonic wave is projected.

3. A laser oscillation device according to claim 1, wherein a wavelength conversion crystal for third harmonic wave is provided on said wavelength conversion crystal for second harmonic wave so that the second harmonic wave is converted to a third harmonic wave by said wavelength conversion crystal for third harmonic wave, and a reflection film for reflecting the third harmonic wave is formed on an exit end surface of said wavelength conversion crystal for second harmonic wave or on an incident end surface of said wavelength conversion crystal for third harmonic wave.

4. A laser oscillation device according to claim 1 or 3, wherein there is provided an optical member with optical effects between said crystals as required.

5. A laser oscillation device according to claim 1 or 3, wherein said optical crystals are jointed together and are integrated with each other.

6. A laser oscillation device according to claim 5, wherein said optical crystals adjacent to each other are jointed together by using an adhesive agent, the optical crystal positioned on an exit side is an optical crystal for converting an incident light to a harmonic wave of higher order, and a reflection film for reflecting the harmonic wave of higher order is formed on an incident end surface of said optical crystal positioned on the exit side.

7. A laser oscillation device according to claim 6, wherein a reflection film for reflecting the harmonic wave of higher order is formed on the incident end surface of said optical crystal positioned on the exit side, and polarization of the harmonic wave of higher order is maintained and the harmonic wave of higher order is projected.
